# EUROPEAN PATENT SPECIFICATION

(11) **EP 0 499 640 B1**
(45) Date of publication and mention of the grant of the patent: **28.12.1994**
(21) Application number: 90915177.1
(22) Date of filing: 19.10.1990
(51) Int. Cl.: B62D 25/10, F02B 77/11

(54) **SOUND- AND HEAT-PROOFING APPARATUS OF HYDRAULIC OPERATION VALVE**
SCHALLDÄMPFENDE UND WÄRMEISOLIERENDE VORRICHTUNG EINES HYDRAULISCHEN STEUERVENTILS
DISPOSITIF D'INSONORISATION ET D'ISOLATION THERMIQUE D'UNE SOUPAPE DE COMMANDE HYDRAULIQUE

(30) Priority: 31.10.1989 JP 127741/89 U
(43) Date of publication of application: 26.08.1992
(73) Proprietor: KABUSHIKI KAISHA KOMATSU SEISAKUSHO, Minato-ku Tokyo 107 (JP)
(72) Inventor: YOSHIDA, Yasuhiro, Komatsu-shi Ishikawa 923-03 (JP)
(74) Representative: Meissner, Peter E., Dipl.-Ing.
(86) International application number: JP9001349
(87) International publication number: WO9106465

(56) References cited:
- JP-U- 5 717 881
- JP-U-58 139 534
- JP-Y- 4 737 922

## Description

### TECHNICAL FIELD

The present invention relates to a sound- and heat-proofing apparatus for an operation valve of a hydraulic excavator or the like and, in particular, to a sound- and heat-proofing apparatus for a hydraulic operation valve which can be attached to an engine in an engine room.

### BACKGROUND ART

Conventional hydraulic excavators or the like (see JP-A-5717881) generally employ a structure in which an engine integrated with a hydraulic pump is arranged inside an engine room, with operation valves for changing the discharge oil of the hydraulic pump being arranged either in a separately provided external casing or under a floor frame.

However, the structure in which the operation valves are provided under the floor frame entails a high noise level due to the switching of the operation valves, and since the heat of the oil is isolated and has no means of escape, an area around an operator's cab is heated, resulting in a rather poor comfortableness of the operator.

In view of the above problems in the prior art, it is an object of the present invention to provide a sound- and heat-proofing apparatus for a hydraulic operation valve in which operation valves are arranged inside an engine room and are attached to an engine. The power units are thus integrally arranged and covered by outer casings, thereby reducing the hydraulic noise and the temperature around the operator.

### DISCLOSURE OF THE INVENTION

In accordance with the present invention, an engine integrated with an hydraulic pump is mounted through an elastic member on a car body frame in an engine room of a hydraulic excavator or the like, and operation valves for changing the discharge oil of the hydraulic pump are fitted to a bracket which is fitted to the engine, and the engine room is substantially sealed up by outer casings. A sound-proofing material or a heat-insulating material may be fitted inside these outer casings. Due to this arrangement, the hydraulic noise and the heat of the oil generated in the operation valves are shut off by the outer casings of the engine room, and the area around the operator is not heated. Further, the hydraulic vibration is not easily transmitted to the car body.

### BRIEF DESCRIPTION OF THE DRAWINGS

Fig. 1 is a side view of a sound- and heat-proofing apparatus of a hydraulic operation valve according to an embodiment of the present invention; and
Fig. 2 is a rear view of Fig. 1.

### BEST MODE FOR CARRYING OUT THE INVENTION

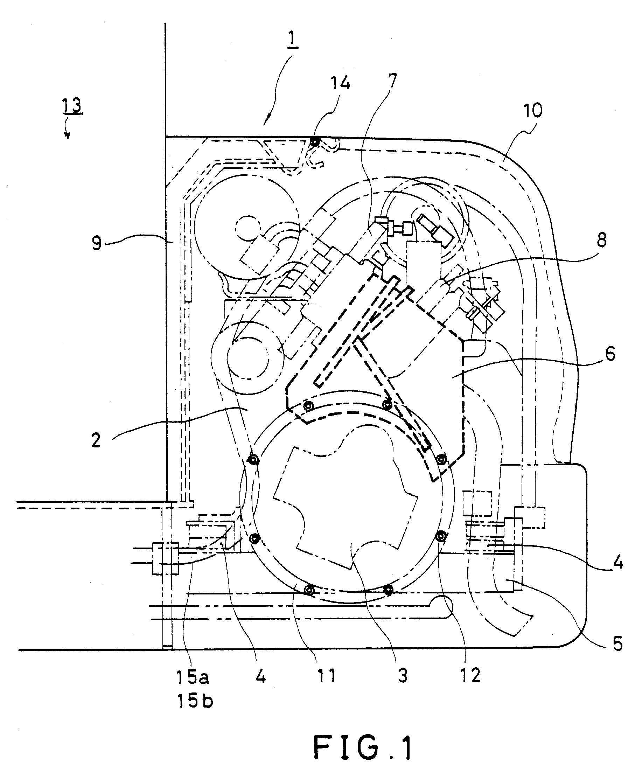

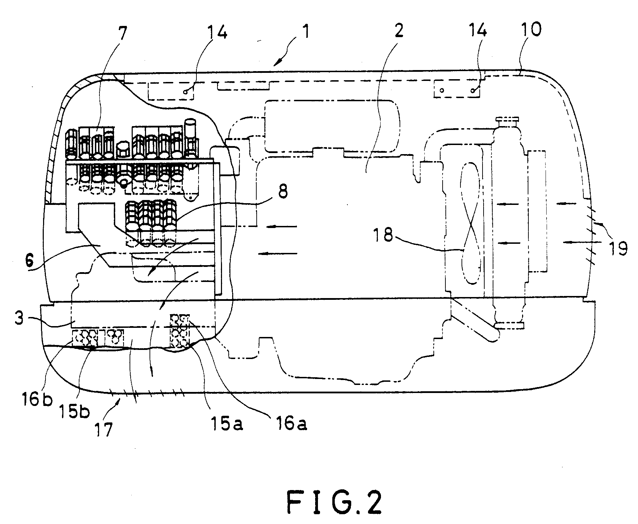

The present invention-will be described in detail with reference to an embodiment shown in Figs. 1 and 2.

In a sound- and heat-proofing apparatus for a hydraulic operation valve according to an embodiment of the present invention, an engine 2 integrated with a hydraulic pump 3 is mounted through elastic members, for example, rubber mounts 4, on a car body frame 5 in an engine room 1, and operation valves 7 and 8 for changing the discharge oil of the hydraulic pump 3 are fitted to a bracket 6 which is fitted to the engine 2, the engine room 1 being covered by outer casings 9 and 10.

The engine 2 is attached to the car body frame 5 by means of rubber mounts 4 provided at four positions, right and left as well as in front and in rear. Further, attached to a fly-wheel housing 11 of the engine 2 is the bracket 6 by utilizing some of a plurality of mounting bolt holes 12 in the upper section thereof so that it will no interfere with the hydraulic pump 3 in the central section thereof. Attached to the bracket 6 are the operation valves 7 and 8 for leading the discharge oil from the hydraulic pump 3 to different actuators. In this way, the operation valves 7 and 8 are attached to the engine 2, which has a large mass, through the intermediation of rubber mounts 4, so that the hydraulic vibration cannot be easily transmitted to the car body frame 5.

The front section of the engine room 1 constitutes a cabin 13, which serves as an operator's cab. The outer casing 9 is arranged on the border of this cabin, thereby preventing the noise and heat in the engine room 1 from being transmitted to the cabin 13.

Provided in the top-rear section of the engine room 1 is the outer casing 10 in such a manner as to be opened and closed on a hinge 14 provided in the top section of the outer casing 9. Accordingly, the transmission of noise and heat is prevented and, at the same time, the engine 2, the hydraulic pump 3, the operation valves 7 and 8 can be inspected by opening the outer casing 10.

Further, the outer casings 9 and 10 may be sealed by gluing a sound-proofing material thereto as needed, thereby obtaining a further improved sound- and heat-proofing effect.

Air is sucked into the engine room 1 by means of a radiator and an oil cooler fan 18 through a suction inlet 19 on the right-hand side of the car body, and is discharged through a discharge outlet 17 on the left-hand side of the car body, thus diffusing the hydraulically generated heat to the exterior of the engine room 1.

Further, a rubber hosepipe group 15a leading from the operation valves 7 and 8 to a motor, a swivel joint, an operating machine, etc. (not shown) and a rubber hosepipe group 15b returning therefrom to the operation valves 7 and 8 extend to the exterior of the engine room 1 through passage holes 16a and 16b provided in the engine room 1, and are led to the different actuators, where various operations are conducted.

In this way, the operation valves 7 and 8 are substantially sealed up in the engine room 1, together with the engine 2 and the hydraulic pump 3, etc. Accordingly, the area around the operator is not heated by the hydraulic heat of these components, and the hydraulic noise can be prevented. Further, the transmission of the hydraulic vibration is also prevented, thus improving the comfortableness of the operator.

### INDUSTRIAL APPLICABILITY

The sound- and heat-proofing apparatus for a hydraulic. operation valve of the present invention is useful in that it reduces the temperature around the operator and the hydraulic noise and mitigates the hydraulic vibration, improving the comfortableness of the operator.

## Claims

1. A sound- and heat-proofing apparatus of a hydraulic operation valve (7,8), wherein an engine (2) integrated with an hydraulic pump (3) is mounted through an elastic member (4) on a car body frame (5) in an engine room (1) of a hydraulic excavator or the like, operation valves (7,8) for changing discharge oil of said hydraulic pump being fitted to a bracket (6) which is fitted to said engine, said engine room being substantially sealed up by outer casings (9,10).

2. A sound- and heat-proofing apparatus of a hydraulic operation valve according to Claim 1, wherein at least either a sound-proofing material or a heat-insulating material is fitted inside said outer casings (9,10) of said engine room.

## Patentansprüche

1. Schall- und wärmedämmende Vorrichtung eines Hydrauliksteuerventils (7,8), dadurch gekennzeichnet, daß der Motor (2) mit einer integrierten Hydraulikpumpe (3) durch ein elastisches Teil (4) auf einem Karosserierahmen (5) in einem Motorraum (1) eines Hydraulikbaggers oder dergleichen angebracht ist, wobei die Steuerventile (7, 8) zum Umschalten des Hydrauliköls der Hydraulikpumpe an einem an diesem Motor befestigten Träger (6) angebracht sind und der Motorraum durch Außenverkleidungen (9,10) im wesentlichen abgedichtet wird.

2. Schall- und wärmedämmende Vorrichtung eines Hydrauliksteuerventils gemäß Anspruch 1, dadurch gekennzeichnet, daß wenigstens ein schall- oder wärmedämmendes Material im Innern der Außenverkleidungen (9,10) des Motorraums angebracht ist.

## Revendications

1. Dispositif isolant contre le son et la chaleur d'une vanne de service hydraulique (7,8), dans lequel un moteur (2) intégré avec une pompe hydraulique (3) est monté, par un organe élastique (4), sur un châssis (5) dans une chambre de moteur (1) d'un excavateur hydraulique ou analogue, les vannes de service (7,8) pour changer l'huile d'évacuation de ladite pompe hydraulique étant montées sur une patte (6) qui est montée sur ledit moteur, ladite chambre du moteur étant sensiblement fermée par des carters externes (9,10).

2. Appareil isolant contre le son et la chaleur d'une vanne de service hydraulique selon la revendication 1, dans lequel au moins soit une matière d'isolation contre le son, soit une matière d'isolation contre la chaleur est disposée à l'intérieur desdits carters externes (9,10) de ladite chambre du moteur.
